# EUROPEAN PATENT APPLICATION

(11) **EP 4 682 125 A1**
(43) Date of publication of application: **21.01.2026**
(21) Application number: 25186785.9
(22) Date of filing: 01.07.2025
(51) Int. Cl.: C03C 17/00, C08L 29/04, C09D 129/04

(54) **ANTI-FOG AND SUBSTRATE CLEANING COMPOSITION AND PROCESS FOR THE USE THEREOF**

(30) Priority: 18.07.2024 US 202463672877 P; 20.06.2025 US 202519243899
(71) Applicant: Illinois Tool Works Inc., Glenview IL 60025 (US)
(72) Inventor: NGUYEN, Chi Quang, Glenview, 60025 (US); ESCOTO Jr., John Isidoro, Glenview, 60025 (US)
(74) Representative: HGF

(57) **Abstract**

An anti-fog composition is provided that includes a water-soluble polymer and a colloidal dispersion. The hydrophilic solvent system includes water and a miscible organic solvent, with water being the majority by weight of the composition. A process for applying the composition to a substrate is also provided. The substrates include not only glass, but also polycarbonate. The composition is well suited for formation of an end user kit for applying such a film to a substrate. Such a kit includes a container for the composition, or a wipe wet with the composition. The container being a bottle, or a propellant filled aerosol canister. Upon the composition drying on the substrate, the anti-fog film is produced without resort to additional application processes.

## Description

### RELATED APPLICATIONS

This application is a non-provisional application that claims priority benefit of US Provisional Application Serial Number 63/672,877, filed July 18, 2024; the contents of which are hereby incorporated by reference.

### FIELD OF THE INVENTION

The present invention in general relates to a composition to inhibit fogging and process for the use thereof and in particular, to such a composition that also functions to clean a substrate thereby extending the fog condensation prevention thereon.

### BACKGROUND OF THE INVENTION

The nucleation of water droplets on a substrate from ambient atmosphere poses an ongoing problem for viewing and vehicle operation under high humidity conditions. The operation of automobiles, spacecraft, and aircraft are all compromised by poor visibility associated with fog condensation on a viewing substrate of such vehicles and craft. Other transparent viewing surfaces also exhibit diminished performance as a result of droplet nucleation on such surfaces. These other surfaces include glasses, goggles, camera lenses, and binoculars. Additionally, with drones, autonomous vehicles, and driver warning-ladened vehicles proliferating, concerns about visual impairment associated with condensation on viewing substrates is an increasingly urgent problem as computer interfaced operation is often less adaptable than a human operator.

As water droplets function as refractory lens on a transparent substrate, the droplets tend to scatter transmitted light thereby impairing Traditionally, for preventing fog on various substrates, a method of coating a surface with a surfactant that has wetting property is generally used. The duration of the anti fog effect by using this method is limited and regular re-application is required. Moreover, the performance under high humidity conditions is not good because the surfactant cannot hold a large amount of water that has condensed on the surface. Hence, the conventional anti-fog develops rivulets of water and has a streaked transparency.

More recently, the field has learned to appreciate that substrate fogging can be inhibited by coating a substrate with a water-absorbing material, as opposed to a surfactant that simply modifies the wetting properties of a substrate. Water absorbing materials that have been used a, polyvinyl alcohol-based polymers, acrylic polymers, and polyether-based polymers. The use of these water absorbing polymers has extended the duration of an anti-fog effect relative to surfactant-based compositions. Water absorbing material deposition techniques for an anti-fog film include reliance on heat treatment (U.S. 5,976,680), vacuum processes (U.S. 6,287,683), and dip-, spray, or spin-coating (U.S. 6,394,613). A characteristic common to these anti-fog film deposition techniques is the inclusion of two or more treatment steps to apply an anti-fog film. Additionally, these techniques require a catalyst needed to crosslink the polymer into a final film, heat treatment to temperatures of greater than 80°C, vacuum process or the necessity to remove the substrate from the substrate mounting in order to perform the dip coating, spray coating or spin coating to achieve an optically smooth anti-fog film, or combinations of these processes. As a result of these limitations associated with prior art techniques for applying a water-absorbing material containing anti-fog film onto a substrate, the ability to reapply such an anti-fog composition while a substrate is in field use is severely hampered.

These problems were addressed successfully by applying a hydrophilic superabsorbent polymer to the glass substrate, as detailed in U.S. 9,150,766. This polymer coating allowed water droplets to spread as a thinner and more uniform layer thereby limited the lensing effect associated with water droplets. These compositions were also amenable to application from a spray bottle and did not require catalysts or treatments such as heat to achieve a transparent polymer coating on the substrate. Unfortunately, these compositions were not effective on polycarbonates. Polycarbonates are routinely used to form goggles, safety glasses, faceshield visor, window tints, and headlight domes. Furthermore, superabsorbent polymer coatings are quite soft and susceptible to weathering.

Thus, there exists a need for a moisture absorbing anti-fog composition that addresses the limitations of the existing composition. There also exists a need for a process to apply such a composition from a kit to provide an anti-fog film on a substrate.

### SUMMARY OF THE INVENTION

An anti-fog composition is provided that includes a water-soluble polymer and a colloidal dispersion. The hydrophilic solvent system includes water, with water being the majority by weight of the composition.

A process for applying the composition to a substrate is also provided. The substrates include not only glass, but also polycarbonate.

The composition is well suited for formation of an end user kit for applying such a film to a substrate. Such a kit includes a container for the composition, or a wipe wet with the composition. The container being a bottle, or a propellant filled aerosol canister. Upon the composition drying on the substrate, the anti-fog film is produced without resort to additional application processes.

### DETAILED DESCRIPTION OF THE INVENTION

The present invention has utility as an anti-fog composition that forms a film on a substrate to inhibit water droplet nucleation on the film and the underlying substrate. The present invention has the attribute of being amenable to application as a wipe-on or spray applied composition that forms a film without resort to the complex deposition processes that characterized prior art systems. The composition is also suitable for application to polycarbonate, as well as glass substrates. A kit is provided with such a composition along with instructions for end user field application of the inventive composition to a substrate so as to impart an anti-fog film thereto. Owing to the ability to apply an anti-fog film according to the present invention in the field, an inventive composition is readily applied repeatedly in the field as anti-fog attributes of a previously applied film degrade. An inventive composition is also amenable to formulation independent of, and therefore devoid of volatile organic compounds (VOCs), or at least at amounts of VOCs of less than 1%. Furthermore, through inclusion of a colloidal dispersion, the resulting coating has a greater functional longevity than previous films formed only from polymers. In still other embodiments, the colloidal dispersion is photo-active and therefore imparts a self-cleaning property to the film and thus to the underlying substrate.

It is to be understood that in instances where a range of values are provided that the range is intended to encompass not only the end point values of the range but also intermediate values of the range as explicitly being included within the range and varying by the last significant figure of the range. By way of example, a recited range of from 1 to 4 is intended to include 1-2, 1-3, 2-4, 3-4, and 1-4.

As used herein amounts of components refer to the amount active component and thus, without regard to water or other solvents in which the active component is dissolved to facilitate formulating.

An inventive anti-fog composition includes at least one water-soluble polymer. As used herein "water-soluble polymer" is defined as a synthetic or naturally occurring polymer as a solution in water in an amount of at least 1 weight percent in deionized (DI) water. It is appreciated that a water-soluble polymer may actually be dissolved under other conditions that illustratively include heating the water, mechanical agitation, ultrasonic agitation, or a combination thereof. Typical solubility amounts range from 0.5 to 5 weight percent in DI water. It is appreciated that a miscible organic solvent may enhance solubility of the water-soluble polymer, but for the purpose of definition of this term, miscible organic solvent effects are not considered. It is further appreciated that a water-soluble polymer can be rendered insoluble and a superabsorbent polymer by increasing the amount of cross-linking to form a three-dimensional matrix. Factors relevant to solubility of a water-soluble polymer include at least polymer weight average molecular weight, the ratio of hydroxyl or ionic moieties per unit mass, and the degree of crosslinking.

Water-soluble polymers and copolymers operative herein illustratively include polyethylene glycol, polyacrylamide, polyacrylic acid, polyvinyl alcohol, polyvinyl pyrrolidone, polyacrylonitrile, polymethacrylonitrile, polyvinylacetates, poly vinylsulfonic acid, poly(divinyl ether-maleic anhydride), polyphosphoesters, and combinations thereof, and block co-polymers in which any of the aforementioned comprises at least 50% by number of subunits of said block copolymer.

The water-soluble polymer or combinations of the water-soluble polymer are typically present in a fully formulated inventive composition from 0.1 to 12 total weight percent. In some inventive embodiments, water-soluble polymer is polyvinyl alcohol alone, or in combination with other water-soluble polymers. In some inventive embodiments, polyacrylic acid is present with an anionic backbone alone or in combination with other water-soluble polymers or copolymers. In still other inventive embodiments, the water-soluble polymer is biodegradable. Anionic and non-ionic polymer backbones of water-soluble polymers or co-polymers are particularly effective in rendering a substrate hydrophilic. It is appreciated that more than one water-soluble polymer is readily present in an inventive composition to adjust viscosity, limit streaking, and anti-fog film formation properties.

A colloidal dispersion is present in an inventive composition. Without intending to be bound to a particular theory, the inclusion of the colloidal dispersion is observed to enhance the hardness and durability of a film formed on a substrate through the evaporation of the solvent system from an inventive composition. Colloidal dispersions operative herein illustratively include silica, titania, zinc oxide, graphene oxide, carbon nanotubes, metal nanocrystals, or a combination thereof. Colloidal dispersions with an anionic charge are particularly effective in rendering a substrate hydrophilic. It is appreciated that large bandgap semiconductor colloidal dispersion such as titania and zinc oxide, as well as metal nanocrystals such as auto-catalytic copper can impart a self-cleaning effect to a substrate coated with a film formed from an inventive composition. US 7,1448,40B2 is exemplary of self-cleaning titania colloidal dispersions. The colloidal dispersion or combinations of the colloids are typically present in a fully formulated inventive composition from 0.1 to 10 total weight percent.

As used herein, graphene oxide is defined as graphene with various oxygen-containing functionalities such as epoxide, carbonyl, carboxyl, and hydroxyl groups and a total oxygen content of 10-60 weight percent, typically around 20-50 weight percent that imparts water dispersibility.

The solvent system of the present invention is predominantly water yet in some inventive embodiments, also contains an organic solvent miscible with water. The miscible solvent can serve several functions in an inventive composition, these functions illustratively include surface cleaning, solubility, hydrotropic properties, viscosity, and combinations thereof. A miscible organic solvent operative herein illustratively includes a glycol ether, such as dipropylene glycol n-butyl ether, tri(propylene glycol) butyl ether, or diethylene glycol n-butyl ether; C₁-C₄ alcohols; acetone; acetonitrile; methyl ethyl ketone; dimethylformamide; or dimethyl sulfoxide. A miscible organic solvent is typically present from 0.8 to 10 total weight percent of the fully formulated composition. It is appreciated that the miscible organic solvent can be a source of VOC emissions and if a low VOC product is desired choice of the miscible organic solvent is a component of the VOC composition. The miscible organic solvent is typically present in a weight ratio relative to water of from 0 - 0.8:1. The solvent system is typically present from 70 to 98 total weight percent of an inventive composition.

As used herein, "VOC" is defined as a compound listed on the United States Environmental Protection Agency Master List of Volatile Organic Compounds.

In some inventive embodiments, a wetting agent is optionally provided in the composition. While not intending to be bound to a particular theory, a wetting agent is provided the render the surface hydrophilic by forming a hydrophilic film thereon that facilitates spreading of the water soluble polymer as the composition dries to form the film. Wetting agents operative herein illustratively include hexyl D-Glucopyranoside reaction products with sodium bis(3-chloro-2-hydroxypropyl) phosphate (1:1) (CAS 1417861-94-9), methyl (propoxylhydroxide, ethoxylated) bis (trimethylsiloxy silane), siloxane polyalkynleneoxide copolymer, siloxane polyether copolymer, polydimethyl siloxane polyethylene, oxide-propyleneoxide copolymer, polydimethyl siloxane silicone fluid, polyalkyleneoxide modified heptamethyltrisiloxane fluorinated alkylalkoxylate fluorocarbon telomere B monoether with polyethylene glycols, ethoxylated tetramethyl decanediol and combinations thereof. Organosiloxane-oxyalkylene block copolymers is operative herein as described for example in U.S. Patent 3,933,407; and 3,299,112. It should be appreciated that each of the above wetting agents is commercially available in at least one form. In order to achieve misibility with the inventive solvent and impart desirable properties to the resultant anti-fog film applied to the substrate, a wetting agent typically has a number average molecular weight of between 500 and 20,000. A wetting agent, if present, is typically used from 0.1 to 10 total weight percent. It is appreciated that the specific amount of a wetting agent as used herein depends on factors including wetting agent molecular weight, Hansen solubility parameter, and water soluble polymer loading.

An inventive composition optionally includes a hydrophilic surfactant. Without intending to be bound to a particular theory, the hydrophilic surfactant affords an anti-spotting function to a film formed from an inventive composition. Hydrophilic surfactants operative herein illustratively include nonionic polymeric fluorinated surfactants, anionic phosphonated fluorinated surfactants, nonionic ethoxylated fluorinated surfactants, polyether modified polydimethylsiloxane, polyether modified polymethylalkylsiloxane, aralkyl modified polymethylalkylsiloxane, polyester modified hydroxyl functional polydimethylsiloxane, acryl functional polyester modified polydimethylsiloxane, polyether polyester modified hydroxyl functional polydimethylsiloxane, a solution of polyacrylate, a solution of a fluoro-modified polyacrylate, or a combination thereof. A hydrophilic surfactant operative if present, is typically used from 0.1 to 16 total weight percent.

An inventive composition also includes various additives to enhance a property of an inventive composition; the property illustratively including storage stability, film formation, film durability and cleaning properties. Other additives operative herein optionally include alone or in combination hydrophilic film plasticizers, biocides, chelating agents, pH modifier, fragrance, or defoamers.

A hydrophilic film plasticizer operative herein illustratively includes hydoxyethylpyrrolidone.

A biocide operative herein illustratively includes 2-methyl - 4 - isothiazoline - 3 - one, methylchloroisothiazolinone/2-methyl - 4 - isothiazoline - 3 - one, 1, 2 - benzisothiazolinone/dipropylene glycol, sodium hydroxymethylglycinate, poly hexamethylene biguanide hydrochloride, caprylyl glycol/phenoxyethanol/hexylene glycol.

A chelating agent operative herein illustratively ethylenediamine disuccinic acid (EDDS), ethylenediamine dimalonic acid (EDDM), and ethylenediamine diglutaric acid (EDDG), ethylenediaminetetraacetic acid (EDTA), diethylenetriaminepentaacetic acid (DTPA), nitrilotriacetic acid (NTA), iminodiacetic acid (IDA), iminotriacetic acid (ITA), ethylenediamine (En), N,N'-diethylenediamine (Den), diethylenetriamine (DTN), diethylenetetramine (Trien), triaminotriethylene amine, triethanolamine, malonic acid, succinic acid, glutaric acid, citric acid, fumaric acid, maleic acid, aconitic acid, hydroxyethylethylene diamine triacetic acid (HEDTA), or combinations thereof. Each of the aforementioned is operative herein regardless of the mix of cationic counterions including onium, sodium, potassium, and calcium.

According to some inventive embodiments, the composition additionally includes a pH modifier. A pH modifier operative herein illustratively includes liquid sodium silicate, potassium carbonate, sodium carbonate, amino-2-hydroxyethane, 2-[bis(2-hydroxyethyl)amino]ethanol, 2-amino-2-methyl-1-propanol, soda ash, sodium hydroxide, lime, and a combination thereof. The pH modifier also acts as a soil-capturing agent.

A fragrance is readily added to the composition. Exemplary fragrances are those of citrus, pine, floral, musk, or fruits.

An inventive composition optionally includes a defoaming agent in an amount present to inhibit blister formation in anti-fog film so produced from an inventive composition.

Defoamer agents operative herein illustratively include silicone-based defoamers; mineral oil-based defoamers, and mixtures of foam destroying polymers and hydrophobic solids such as polyurias, as are known to the art. Specific exemplary silicone-based defoamers illustratively include silica-filled polydimethyl siloxane and polyether-modified polysiloxanes.

The aforementioned optional additives, each, if present, is used in an amount of in an amount of 0.1 to 3 total weight percent of the fully formulated composition.

An inventive composition has a fully formulated viscosity of between 1 and 500 cSt, as measured at room temperature. It is appreciated that higher viscosity compositions are well suited for application from pressurized containers such a propellant containing aerosols.

An inventive composition optionally includes a halocarbon or hydrocarbon propellant in instances when an aerosol delivery system of an inventive composition is desired. Aerosol propellants operative herein illustratively include difluoroethane, trifluoroethane; alkanes such as butane, pentane, isobutane; propane; ethers such as dimethyl ether and diethyl ether; nitrogen; carbon dioxide; and combinations thereof. The resultant composition inclusive of a propellant is sealed within a conventional metal aerosol canister and applied by spray application as is conventional to the art.

While it should be appreciated that there is virtually no limit as to the nature of a substrate to which an inventive composition is applied to as to form an anti-fogging film, with the proviso that the substrate is not dissolved or otherwise damaged through exposure to an inventive composition, exemplary substrates that are exposed to environmental conditions in which water droplet nucleation can occur on the substrate and having optical transmission attributes in their usage illustratively include optically transparent or translucent substrates formed of polystyrene, polycarbonate, polymethyl methacrylate, quartz glasses, silicate glasses, and ceramics.

Typical and preferred compositions according to the present inventions are provided in Table 1.

**Table 1. Inventive Composition (amounts in total weight percent exclusive of optional propellant)**

| Ingredient | Typical | Preferred |
|---|---|---|
| Water soluble polymer | 0.5-12 | 0.6-4 |
| Colloidal dispersion | 0.1 -10 | 0.3-1.8 |
| Miscible organic solvent of aqueous solvent system | 0.8-10 | 1.2-10 |
| Wetting agent | 0-10 | 0.1-6 |
| Hydrophilic surfactant (anti-spotting agent) | 0-16 | 0.1-6 |
| Plasticizer | 0-3 | 0.01-2 |
| Biocide | 0-3 | 0.01-0.5 |
| pH modifier | 0-3 | 0.01-2 |
| Fragrance | 0-3 | 0.01-2 |
| Defoamer | 0-3 | 0.01-2 |
| Solvent system Organic: water 0-0.8:1 | to 100% | to 100% |

An inventive composition is readily provided as a kit in the form of a bottle or aerosol canister. The bottle is optionally equipped with a pump- or spray-trigger. With the provision of an optional wipe to remove excess composition, along with instructions for doing so, an inventive kit is operational. Unlike prior art compositions, the inventive composition is suitable for usage with a microfiber- or paper towel-material as the wipe in some inventive embodiments. The instructions providing details as how to prepare a substrate, apply the inventive composition, removal of excess from the substrate and the time and properties of the anti-fog film so applied. The instructions can also provide details as to how the composition is re-applied after an applied film is worn. It is also appreciated that a pre-impregnated wipe is also provided with similar instructions for application to the substrate.

The present invention is further detailed with respect to the following non-limiting examples that are provided to further illustrate the preparation of specific inventive compositions and certain attributes associated with the resulting films on substrates.

### EXAMPLE 1

To 80 grams of deionized water is added 3 grams of dipropylene glycol n-butyl ether, 1.17 grams of polyvinyl alcohol with a minimum of hydrolysis 98%, 0.7 grams of alkaline aqueous dispersion of colloidal silica, 2 grams of sodium acrylic polymers having a number average molecular weight of 3,500. Additional water is added to bring the total weight to 100 grams. The resulting composition is applied to the surface of a borosilicate glass.

### EXAMPLE 2 and COMPARATIVE EXAMPLE

Glass plates are sprayed with anti-fog composition on both sides both sides with the composition of Example 1 (Example 2) or the composition of Example 1 of US 9,150,766 (Comparative Example). The sprayed glass plates processed according to test protocol EN 168 as described in Wahab, I. F., Bushroa, A. R., Teck, S. W., Azmi, T. T., Ibrahim, M. Z., & Lee, J. W. (2023). Fundamentals of antifogging strategies, coating techniques and properties of inorganic materials; a comprehensive review. Journal of Materials Research and Technology, 23, 687-714.

The Example 2 plate shows greater clarity relative to the Comparative Example.

### EXAMPLE 3

The plates of Example 2 and the Comparative Example are subjected to a simulated wiper blade abrasion test per National Highway Traffic Safety Administration test procedure tp104-08. The Example 2 film coated glass has a durability of five times that of the Comparative Example.

### EXAMPLE 4

The composition of Example 1 is modified through inclusion of 0.5 total weight percent of tetra sodium ethylenediaminetetraacetic acid with a commensurate reduction in the amount of water. The resulting composition produced films with properties similar to those of Example 2.

### EXAMPLE 5

The composition of Example 1 is modified through inclusion of 0.5 total weight percent of tetra sodium ethylenediaminetetraacetic acid with a commensurate reduction in the amount of water. The resulting composition produced films with properties similar to those of Example 2.

### EXAMPLE 6

The composition of Example 1 is modified through omission of the polyacrylic acid and a commensurate increase in the amount of water. The resulting composition produced films with properties similar to those of Example 2.

### EXAMPLE 7

The composition of Example 1 is modified through inclusion of 1 gram of sodium hexylglucosides hydroxypropyl phosphate as a wetting agent with a commensurate decrease in the amount of water. The resulting composition produced films with properties similar to those of Example 2.

### EXAMPLE 8

The composition of Example 1 is modified through a like amount of colloidal titania in place of colloidal silica. The resulting composition produced films with properties similar to those of Example 2.

### EXAMPLE 9

The composition of Example 1 is modified through exclusion of dipropylene glycol n-butyl ether and a commensurate increase in the amount of water. The resulting composition produced films with properties similar to those of Example 2.

### EXAMPLE 10

The composition of Example 1 is presoaked into a microfiber wipe wipe and upon ringing excess liquid from the wipe, the wipe is applied to a substrate surface. The substrate surface is wiped dry with a clean and dry synthetic towelette. The resulting film functions as detailed in Example 2..

### EXAMPLE 11

The composition of Example 1 is sealed in a conventional metal aerosol canister with gaseous nitrogen as a propellant. The canister mixture is applied by spray application to the same substrates as Example 1 with excess liquid being removed from the substrate surface. The resulting film coated substrates are tested and perform in a similar manner as to those in Example 2.

Patents and publications mention the specification are indicative of the levels of those skilled in the art to which the invention pertains. These patents and publications are incorporated herein by reference to the same extent as if each individual patent or publication was specifically and individually incorporated herein by reference.

The forgoing description is illustrative of particular embodiments of the invention but is not meant to be a limitation upon the practice thereof. The following
claims, including all equivalents thereof are intended to define the scope of the invention.
Certain embodiments of the invention are described in the following clauses:
Clause 1. An anti-fog composition comprising:
   a water-soluble polymer;
   a colloidal dispersion; and
   a hydrophilic solvent system comprising water, with water being the majority by weight of the composition.
Clause 2. The composition of clause 1 wherein said water-soluble polymer is one or more of: polyethylene glycol, polyacrylamide, polyacrylic acid, polyvinyl alcohol, polyvinyl pyrrolidone, polyacrylonitrile, polymethacrylonitrile, polyvinylacetates, poly vinylsulfonic acid, poly(divinyl ether-maleic anhydride), polyphosphoesters, xanthan gums, pectins, dextrans, carrageenan, guar gums, hyaluronic acid, albumins, and combinations thereof, and block co-polymers in which any of the aforementioned comprises at least 50% by number of subunits of said block co-polymer.
Clause 3. The composition of clause 1 wherein said water-soluble polymer is present from 0.01 to 5 total weight percent.
Clause 4. The composition of clause 1 wherein said water-soluble polymer comprises polyvinyl alcohol.
Clause 5. The composition of clause 1 wherein said polyacrylic acid is present with an anionic backbone.
Clause 6. The composition of clause 1 wherein said water-soluble polymer is biodegradable.
Clause 7. The composition of clause 1 wherein said water-soluble polymer has a solubility of at least 1 percent by weight in deionized water at 20 degrees Celsius.
Clause 8. The composition of clause 1 wherein said colloidal dispersion is one or more of silica, titania, zinc oxide, graphite oxide, graphene oxide, carbon nanotubes, metal nanocrystals, or a combination thereof.
Clause 9. The composition of clause 1 wherein said colloidal dispersion is present in amount to impart self-cleaning upon drying on a substrate upon exposure to sunlight.
Clause 10. The composition of clause 1 further comprising a miscible organic solvent.
Clause 11. The composition of clause 1 wherein said miscible organic solvent is at least one of: a glycol ether, acetone, acetonitrile, methyl ethyl ketone, dimethylformamide, or dimethyl sulfoxide.
Clause 12. The composition of clause **11** wherein said miscible organic solvent comprises said glycol ether and said glycol ether is at least one of: dipropylene glycol n-butyl ether, tri(propylene glycol) butyl ether, diethylene glycol n-butyl ether.
Clause 13. The composition of clause 1 further comprising a wetting agent.
Clause 14. The composition of clause 13 wherein said wetting agent is at least one of is at least one of: hexyl D-Glucopyranosidereaction products with sodium bis(3-chloro-2-hydroxypropyl) phosphate (1:1) (CAS 1417861-94-9), methyl (propoxylhydroxide, ethoxylated) bis (trimethylsiloxy silane), siloxane polyalkynleneoxide copolymer, siloxane polyether copolymer, polydimethyl siloxane polyethylene, oxide-propyleneoxide copolymer, polydimethyl siloxane silicone fluid, polyalkyleneoxide modified heptamethyltrisiloxane fluorinated alkylalkoxylate fluorocarbon telomere B monoether with polyethylene glycols, ethoxylated tetramethyl decanediol.
Clause 15. The composition of clause 1 further comprising at least one additive of: an anti-spotting agent, a biocide, a chelating agent, a defoamer, or a light stabilizer.
Clause 16. The composition of clause 1 having a volatile organic compound content (VOC) of between 0 and 0.5 total weight percent.
Clause 17. A process for applying an anti-fog film to a substrate comprising: applying the composition of clause 1 to the substrate to form the film.
Clause 18. The process of clause 17 further comprising and removing excess composition from the surface prior to forming the film without resort to a catalyst or heating.
Clause 19. The process of clause 18 specifically excluding an additional step beyond allowing the composition to dry to form the film.
Clause 20. A film formed by the evaporation of the solvent system from clause 1 onto a substrate.

## Claims

1. An anti-fog composition comprising:
a water-soluble polymer;
a colloidal dispersion; and
a hydrophilic solvent system comprising water, with water being the majority by weight of the composition.

2. The composition of claim 1, wherein said water-soluble polymer is one or more of: polyethylene glycol, polyacrylamide, polyacrylic acid, polyvinyl alcohol, polyvinyl pyrrolidone, polyacrylonitrile, polymethacrylonitrile, polyvinylacetates, poly vinylsulfonic acid, poly(divinyl ether-maleic anhydride), polyphosphoesters, xanthan gums, pectins, dextrans, carrageenan, guar gums, hyaluronic acid, albumins, and combinations thereof, and block co-polymers in which any of the aforementioned comprises at least 50% by number of subunits of said block co-polymer.

3. The composition of claim 1 or claim 2, wherein said water-soluble polymer is present from 0.01 to 5 total weight percent, and/or wherein said water-soluble polymer comprises polyvinyl alcohol.

4. The composition of any one of claims 1 to 3, wherein said polyacrylic acid is present with an anionic backbone.

5. The composition of any one of claims 1 to 4, wherein said water-soluble polymer is biodegradable, and/or wherein said water-soluble polymer has a solubility of at least 1 percent by weight in deionized water at 20 degrees Celsius.

6. The composition of any one of claims 1 to 5, wherein said colloidal dispersion is one or more of silica, titania, zinc oxide, graphite oxide, graphene oxide, carbon nanotubes, metal nanocrystals, or a combination thereof, and/or wherein said colloidal dispersion is present in amount to impart self-cleaning upon drying on a substrate upon exposure to sunlight.

7. The composition of any one of claims 1 to 6, further comprising a miscible organic solvent, and optionally wherein said miscible organic solvent is at least one of: a glycol ether, acetone, acetonitrile, methyl ethyl ketone, dimethylformamide, or dimethyl sulfoxide.

8. The composition of claim 7 wherein said miscible organic solvent comprises said glycol ether and said glycol ether is at least one of: dipropylene glycol n-butyl ether, tri(propylene glycol) butyl ether, diethylene glycol n-butyl ether.

9. The composition of any one of claims 1 to 8 further comprising a wetting agent, and optionally wherein said wetting agent is at least one of is at least one of: hexyl D-Glucopyranosidereaction products with sodium bis(3-chloro-2-hydroxypropyl) phosphate (1:1) (CAS 1417861-94-9), methyl (propoxylhydroxide, ethoxylated) bis (trimethylsiloxy silane), siloxane polyalkynleneoxide copolymer, siloxane polyether copolymer, polydimethyl siloxane polyethylene, oxide-propyleneoxide copolymer, polydimethyl siloxane silicone fluid, polyalkyleneoxide modified heptamethyltrisiloxane fluorinated alkylalkoxylate fluorocarbon telomere B monoether with polyethylene glycols, ethoxylated tetramethyl decanediol.

10. The composition of any one of claims 1 to 9, further comprising at least one additive of: an anti-spotting agent, a biocide, a chelating agent, a defoamer, or a light stabilizer.

11. The composition of any one of claims 1 to 10 having a volatile organic compound content (VOC) of between 0 and 0.5 total weight percent.

12. A process for applying an anti-fog film to a substrate comprising: applying the composition of any one of claims 1 to **11** to the substrate to form the film.

13. The process of claim 12, further comprising and removing excess composition from the surface prior to forming the film without resort to a catalyst or heating.

14. The process of claim 13 specifically excluding an additional step beyond allowing the composition to dry to form the film.

15. A film formed by the evaporation of the solvent system from any one of claims 1 to 11 onto a substrate.
